# EUROPEAN PATENT SPECIFICATION

(11) **EP 4 027 414 B1**
(45) Date of publication and mention of the grant of the patent: **04.03.2026**
(21) Application number: 21845816.4
(22) Date of filing: 23.07.2021
(51) Int. Cl.: H01M 4/66, H01M 4/04, H01M 4/134, H01M 4/62, H01M 4/1395, H01M 4/36, H01M 4/58

(54) **NEGATIVE ELECTRODE FOR LITHIUM-SULFUR BATTERY AND LITHIUM-SULFUR BATTERY INCLUDING SAME**
NEGATIVE ELEKTRODE FÜR LITHIUM-SCHWEFEL-BATTERIE UND LITHIUM-SCHWEFEL-BATTERIE DAMIT
ÉLECTRODE NÉGATIVE POUR BATTERIE AU LITHIUM-SOUFRE ET BATTERIE AU LITHIUM-SOUFRE LA COMPRENANT

(30) Priority: 24.07.2020 KR 20200092325; 21.07.2021 KR 20210095654
(43) Date of publication of application: 13.07.2022
(73) Proprietor: LG ENERGY SOLUTION, LTD., Seoul 07335 (KR)
(72) Inventor: KIM, Yunjung, Daejeon 34122 (KR); KIM, Bong Soo, Daejeon 34122 (KR); KIM, Kihyun, Daejeon 34122 (KR)
(74) Representative: Goddar, Heinz J.
(86) International application number: PCT/KR2021/009535
(87) International publication number: WO 2022/019698

(56) References cited:
- KR-A- 20150 009 285
- KR-A- 20150 113 661
- KR-A- 20150 113 661
- KR-A- 20160 023 653
- KR-A- 20170 032 194
- KR-B1- 101 879 502
- US-A1- 2013 171 517
- US-A1- 2014 342 249
- US-A1- 2018 175 379

## Description

### [Technical Field]

The present application is a National Stage Application of International Application No. PCT/KR2021/009535, filed on July 23, 2021, which claims priority to Korean Patent Application No. 10-2020-0092325 filed on July 24, 2020 and Korean Patent Application No. 10-2021-0095654 filed on July 21, 2021.

The present invention relates to a negative electrode for a lithium-sulfur battery and a lithium-sulfur battery comprising the same.

### [Background Art]

As the field of application of lithium secondary batteries is expanded not only to portable electronic devices and communication devices, but also to electric vehicles (EV) and electric storage systems (ESS), demand for high capacity of lithium secondary batteries used as power sources thereof is increasing.

The lithium-sulfur battery among various lithium secondary batteries is a battery system using a sulfur-based material comprising an S-S bond (sulfur-sulfur bond) as a positive electrode active material and using lithium metal as a negative electrode active material.

There is an advantage that sulfur, which is the main material of the positive electrode active material in the lithium-sulfur battery, has a low atomic weight, is very rich in resources and thus easy to supply and receive, and is cheap, non-toxic and environmentally friendly.

In addition, the lithium-sulfur battery has a theoretical capacity of 1,675 mAh/g derived from a conversion reaction of lithium ion and sulfur (S₈ + 16Li⁺ + 16e⁻ → 8Li₂S) in the positive electrode, and when using lithium metal (theoretical capacity: 3,860 mAh/g) as a negative electrode, has a theoretical energy density of 2,600 Wh/kg. Since the energy density of the lithium-sulfur battery is much higher than the theoretical energy density of other battery systems currently under study (Ni-MH battery: 450Wh/kg, Li-FeS battery: 480 Wh/kg, Li-MnO₂ battery: 1,000Wh/kg, Na-S battery: 800 Wh/kg) and the lithium secondary battery (250 Wh/kg), the lithium-sulfur battery is attracting attention as a high-capacity, eco-friendly and low-cost lithium secondary battery among secondary batteries that have been developed to date, and is a next-generation battery system to which several studies are being conducted.

Despite these advantages, the lithium-sulfur battery has a problem that it is difficult to secure battery performance and operational stability due to lithium polysulfide generated during charging/discharging processes. Specifically, in the lithium-sulfur battery, lithium polysulfide (lithium polysulfide, Li₂Sx, x=2~8) is generated at the positive electrode during the discharging process, and some of these are easily dissolved in the electrolyte. As a result, a loss of the positive electrode active material is caused, resulting in a decrease in the electrochemical reactivity of the positive electrode and a decrease in the capacity and lifetime of the battery.

In particular, lithium polysulfide diffused to the negative electrode through the electrolyte reacts easily with lithium metal, which is the negative electrode active material, to form an insoluble product on the surface, and also reacts with the negative electrode current collector, causing damage to the negative electrode current collector, negatively affecting the operation of the negative electrode and the performance of the battery.

Accordingly, various technologies have been proposed to solve problems related to lithium polysulfide in the lithium-sulfur battery.

For example, Korean Patent Laid-open Publication No. 2017-0139761 discloses that by comprising a positive electrode active material layer containing a nitrogen-doped carbon material and a protective film, the leaching of lithium polysulfide can be delayed, thereby improving capacity and lifetime of the battery.

In addition, Korean Patent Laid-open Publication No. 2016-0037084 discloses that by coating graphene on the carbon nanotube aggregates containing sulfur, it is possible to prevent lithium polysulfide from being eluted. Document US2018/175379A1 discloses an anode comprising a substrate and a carbon layer deposited thereon via CVD.

In these patents, the leaching of lithium polysulfide and the loss of sulfur thereby were prevented by introducing a material capable of adsorbing lithium polysulfide to the positive electrode in the form of a coating layer, and thus the performance or lifetime degradation of lithium-sulfur batteries was improved to some extent. However, the effect was not sufficient for practical commercial application.

In addition, the performance degradation and damage problems of the negative electrode due to the leached lithium polysulfide were not considered in related arts at all. Therefore, a further need exists for development of a lithium-sulfur battery capable of effectively preventing lithium polysulfide from leaching, and thereby improving the capacity characteristics, lifetime characteristics, and stability of the negative electrode, and providing high-capacity characteristics.

### [Prior Art Document]

### [Patent Document]

Korean Patent Laid-open Publication No. 2017-0139761 (December 20, 2017), Cathode for metal-sulfur battery having cathode active material layer containing N-doped carbon and protective film.
Korean Patent Laid-open Publication No. 2016-0037084 (April 5, 2016), SURFUR-CARBONNANOTUBE COMPLEX, METHOD OF PREPARING THE SAME, CATHODE ACTIVE MATERIAL FOR LITHIUM-SULFUR BATTERY INCLUDING THE SAME AND LITHIUM-SULFUR BATTERY INCLUDING THE SAME.

### [Disclosure]

### [Technical Problem]

Accordingly, the inventors of the present invention have conducted multilateral studies to solve the above problems, and as a result, have confirmed that the performance of the lithium-sulfur battery can be improved by preventing damage to the negative electrode current collector due to lithium polysulfide when a protective layer containing graphene is formed on the surface of the negative electrode current collector and thus have completed the present invention.

Therefore, it is an object of the present invention to provide a negative electrode for a lithium-sulfur battery having excellent corrosion resistance to lithium polysulfide.

In addition, it is another object of the present invention to provide a lithium-sulfur battery comprising the negative electrode.

### [Technical Solution]

In order to achieve the above objects, the present invention provides a negative electrode for a lithium-sulfur battery according to claim 1, which comprises a negative electrode current collector and a protective layer located on at least one surface of a negative electrode current collector and containing graphene.

The protective layer may comprise monolayer graphene or multilayer graphene.

The multilayer graphene may have 2 to 100 layers.

The graphene may have a ratio of a 2D peak and a G peak of 0.2 to 2.0 in a Raman spectrum.

The graphene has a ratio of a D peak and a G peak of 0.01 to 0.6 in a Raman spectrum.

The protective layer may have a thickness of 0.1 to 50 nm.

The protective layer may be impermeable to lithium polysulfide.

The protective layer may be formed by a chemical vapor deposition method.

The negative electrode current collector may comprise at least one selected from the group consisting of nickel, copper, stainless steel, titanium, vanadium, chromium, manganese, iron, cobalt, zinc, molybdenum, tungsten, silver, gold, ruthenium, platinum, iridium, aluminum, tin, bismuth and antimony.

The negative electrode current collector may be in the form of film, sheet, foil, mesh, net, porous body, foam, or nonwoven fabric.

The negative electrode for the lithium-sulfur battery may further comprise a negative electrode active material layer on the protective layer.

In addition, the present invention provides a lithium-sulfur battery comprising the negative electrode for the lithium-sulfur battery.

### [Advantageous Effects]

The negative electrode for the lithium-sulfur battery according to the present invention prevents damage to the negative electrode current collector due to lithium polysulfide, by providing a protective layer containing graphene with few defects on the negative electrode current collector to suppress the penetration of lithium polysulfide, and thus enables the realization of the lithium-sulfur battery having excellent lifetime characteristics.

### [Description of Drawings]

FIG. 1 is a scanning electron microscope image of a copper current collector according to Example 1 of the present invention.
FIG. 2 is a scanning electron microscope image of a copper current collector according to Comparative Example 1 of the present invention.
FIG. 3 is a scanning electron microscope image of the copper current collectors of Examples 1 and 4 after measuring the oxidation degree of copper according to Experimental Example 2 ((a): Example 1, (b): Example 4).
FIG. 4 is a scanning electron microscope image of a copper current collector according to Example 6 of the present invention.
FIG. 5 is a graph showing the evaluation results of lifetime characteristics of coin-type lithium-sulfur batteries according to Examples 2, 5, 7, and 9, and Comparative Examples 2 and 7.
FIG. 6 is a graph showing the evaluation results of lifetime characteristics of coin-type lithium-sulfur batteries according to Example 7 and Comparative Examples 2 and 5.
FIG. 7 is a graph showing evaluation results of lifetime characteristics of pouch-type lithium-sulfur batteries according to Example 3 and Comparative Example 3.
FIG. 8 is a scanning electron microscope image of a cross-section of the negative electrode of Example 3 after evaluating the lifetime characteristics of the battery according to Experimental Example 3.
FIG. 9 is a scanning electron microscope image of a cross-section of the negative electrode of Comparative Example 3 after evaluating the lifetime characteristics of the battery according to Experimental Example 3.

### [Best Mode]

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing particular embodiments only and is not intended to be limiting of the invention. The singular forms "a," "an," and "the" comprise plural referents unless the context clearly dictates otherwise. It is to be understood that the terms such as "comprise" or "have" as used in the present specification, are intended to designate the presence of stated features, numbers, steps, operations, components, parts or combinations thereof, but not to preclude the possibility of the presence or addition of one or more other features, numbers, steps, operations, components, parts, or combinations thereof.

The term "composite" as used herein refers to a material that two or more materials are combined to express a more effective function while forming physically and chemically different phases to each other.

The term "polysulfide" as used herein is a concept comprising both "polysulfide ions (Sₓ²⁻, x = 8, 6, 4, 2))" and "lithium polysulfides (Li₂Sₓ or LiSₓ⁻, x = 8, 6, 4, 2)."

The lithium-sulfur battery has high theoretical discharge capacity and theoretical energy density among various secondary batteries, and sulfur, which is used as a positive electrode active material, has the advantage of being low-cost due to its abundant reserves and being environmentally friendly, and thus the lithium-sulfur battery is attracting attention as a next-generation secondary battery.

As the lithium-sulfur battery is discharged, sulfur, which is a positive electrode active material, is continuously converted from the cyclic S₈ structure to the linear structures of lithium polysulfides (Li₂Sₓ, x = 8, 6, 4, 2) by continuously reacting with lithium ions and, when the lithium polysulfides are completely reduced, lithium sulfide (Li₂S) is finally produced. Among the lithium polysulfides which are the intermediate products of this sulfur reduction reaction (discharging), lithium polysulfide (Li₂Sₓ, usually x > 4), which has the high oxidation number of sulfur, are substances with a strong polarity, and are easily dissolved in the electrolyte comprising a hydrophilic organic solvent and thus there is a problem that the lithium polysulfide is released outside the reaction zone of the positive electrode.

This leaching of lithium polysulfide causes a loss of sulfur that prevents the sulfur from participating in the electrochemical reaction. In addition, the leached lithium polysulfide reacts with lithium, which is a negative electrode active material, to form solid lithium sulfide on the surface of the negative electrode, which is not decomposed even during charging, so it not only acts as an irreversible capacity, but also interferes with the electrochemical reaction on the negative electrode surface. In addition, as lithium polysulfide diffused to the negative electrode easily reacts with copper constituting the negative electrode current collector, there is a problem in that copper sulfide is formed and the negative electrode current collector is corroded and becomes porous. As such, since the diffusion of lithium polysulfide causes structural damage as well as loss of active material at the positive electrode and the negative electrode, the deterioration of the capacity and lifetime characteristics of the lithium-sulfur battery is accelerated, and therefore, in actual operation, all of the theoretical capacity and energy density cannot be realized.

For this purpose, in related arts, a method for introducing a material capable of inhibiting the leaching of lithium polysulfide in the form of an additive or a coating layer to the positive electrode or separator or a method for changing the composition of the electrolyte has been proposed. However, there are disadvantages that the effect of improving the leaching of lithium polysulfide is insignificant, and also the loading amount of sulfur is limited, and it causes a serious problem in the stability of the battery or is inefficient in terms of the process. In addition, in related arts, the problem of damage to the negative electrode, particularly the negative electrode current collector, due to lithium polysulfide was not discussed.

Accordingly, in order to improve the problem that the negative electrode current collector is corroded by the lithium polysulfide and thus the lithium-sulfur battery deteriorates, the present invention provides a negative electrode for a lithium-sulfur battery having a protective layer that prevents contact between the lithium polysulfide and the negative electrode current collector without interfering with electron movement between the negative electrode current collector and the negative electrode active material.

Specifically, the negative electrode for lithium-sulfur battery according to the present invention comprises a negative electrode current collector and a protective layer located on at least one surface of the negative electrode current collector and comprising graphene.

In the present invention, the negative electrode current collector supports the negative electrode active material, and supplies electrons provided from the external conductor to the negative electrode active material or, conversely, plays a role of collecting electrons generated as a result of the electrode reaction and transferring them to the external conductor.

The negative electrode current collector is not particularly limited as long as it has high electron conductivity without causing chemical change in the lithium-sulfur battery. For example, the negative electrode current collector may comprise at least one selected from the group consisting of nickel (Ni), copper (Cu), stainless steel (SUS), titanium (Ti), vanadium (V), chromium (Cr), manganese (Mn), iron (Fe), cobalt (Co), zinc (Zn), molybdenum (Mo), tungsten (W), silver (Ag), gold (Au), ruthenium (Ru), platinum (Pt), iridium (Ir), aluminum (Al), tin (Sn), bismuth (Bi) and antimony (Sb). Preferably, the negative electrode current collector may comprise copper.

The negative electrode current collector may have a fine irregularity structure on its surface or adopt a three-dimensional porous structure in order to increase bonding force with the negative electrode active material. Accordingly, the negative electrode current collector may be in the form of film, sheet, foil, mesh, net, porous body, foam, or nonwoven fabric.

In the present invention, the negative electrode current collector comprises a protective layer formed on at least one surface and containing graphene.

Graphene is one in which a plurality of carbon atoms is covalently linked to each other to form a polycyclic aromatic molecule and thus form a layer or sheet. Since such graphene has excellent chemical and thermal stability as well as high electron conductivity and is impermeable to lithium polysulfide, it is possible to prevent the negative electrode current collector from contacting lithium polysulfide by forming a graphene-containing protective layer on the surface of the negative electrode current collector. Accordingly, it is possible to improve the capacity and lifetime characteristics of the lithium-sulfur battery by solving the problem of corrosion of the negative electrode current collector or the problem of making the negative electrode current collector porous caused by the leaching of lithium polysulfide in the conventional lithium-sulfur battery.

It is preferable that the graphene-containing protective layer is present between the negative electrode current collector and the negative electrode active material to be described later, and has sufficient conductivity not to prevent electron movement therebetween.

The graphene-containing protective layer may be manufactured by various methods, for example, a mechanical exfoliation method, an epitaxial chemical exfoliation method, a chemical vapor deposition (CVD) method, and the like. Preferably, a chemical vapor deposition method is used to form a protective layer containing graphene with good quality.

In general, in the manufacture of graphene, carbon nuclei are created and grow around them. As graphene grains grown around the nuclei meet with each other, grain boundaries are formed. In each grain, the arrangement does not match, and grain boundaries act as defects. It is known that the boundary between grains is a factor that degrades the charge transport properties, as well as these defects in graphene promote a reaction with the surrounding environment, resulting in weak oxidation resistance (corrosion resistance). Moreover, it can be seen that the specific resistance when passing through the grain boundary increases 2 to 10 times or more than the specific resistance of the grain, and that the grain boundary acts as a defect.

In addition, carbon atoms connected by covalent bonds constituting graphene grown at any point on the substrate form a 6-membered ring grain as a basic repeating unit. However, if the growth direction of the graphene grains is different, each grain collides and fails to maintain the 6-membered ring structure, and the 5-membered or 7-membered ring is formed, and thus an irregular crystal arrangement occurs, and this irregularity can act as a defect that lowers the oxidation resistance of graphene.

Accordingly, if the above-mentioned defects exist in graphene, since it may act as a corrosion point by enabling the movement of lithium polysulfide, specifically, polysulfide ion in the vertical direction in graphene, thereby causing corrosion of the negative electrode current collector, the protective layer according to the present invention preferably comprises graphene with minimized defects.

As described above, the large size of graphene grains and the number of grains having a 6-membered ring structure means that the number of defects in graphene is very small, so that the original physical properties of graphene can be maintained. Therefore, the protective layer according to the present invention contains graphene which is very low in defects due to grain boundaries, that is, has large grains and 6-membered ring structures.

The degree of defects in the graphene can be confirmed through Raman spectroscopy analysis. In general, Raman spectroscopy is used to evaluate the properties of graphene, and depending on the number of layers and the degree of defects, the positions and shapes of peaks represented by a D peak near Raman shift of 1350 cm⁻¹, a G peak near a Raman shift of 1600 cm⁻¹, and a 2D peak near Raman shift of 2700 cm⁻¹ are changed. The ratio of the D peak and the G peak (D peak/G peak) is used as a measure indicating the defects of graphene, and the lower the ratio, the better the graphene is. In addition, the ratio of the 2D peak and the G peak (2D peak/G peak) is used as a measure indicating the layer of graphene and shows a higher value when graphene is a monolayer.

As a result of Raman spectroscopic analysis of graphene contained in the protective layer of the present invention, the ratio of the 2D peak and the G peak in the Raman spectrum is 0.2 to 2.0, and the ratio of the D peak and the G peak is 0.01 to 0.6. From this, it can be confirmed that the protective layer according to the present invention contains graphene with few defects. Preferably, the ratio of the 2D peak and the G peak in the Raman spectrum of the protective layer is 0.2 to 1.7, and the ratio of the D peak and the G peak is 0.01 to 0.4. More preferably, the ratio of the 2D peak and the G peak in the Raman spectrum of the protective layer is 0.2 to 1.5, and the ratio of the D peak and the G peak is 0.01 to 0.2.

The graphene-containing protective layer may be formed on one or both surfaces of the negative electrode current collector, but is not particularly limited in the present invention.

The graphene-containing protective layer may comprise monolayer graphene or multilayer graphene.

The multilayer graphene may be one in which at least two layers or more, preferably 2 to 100 layers of graphene are stacked. The graphene contained in the protective layer is preferably monolayer graphene or multilayer graphene of 2 to 30 layers.

The thickness of the protective layer is not particularly limited, and has a range that does not increase the internal resistance of the battery while ensuring the above-described effects. For example, the thickness of the protective layer may be 0.1 to 50 nm, preferably 0.1 to 30 nm. If the thickness of the protective layer is less than the above range, the effect of preventing contact with lithium polysulfide is insignificant, so that it cannot function as a protective layer. On the contrary, if the thickness of the protective layer exceeds the above range, the interfacial resistance may become high, and thus, it may result in an increase in internal resistance during operation of the battery.

As described above, when forming the graphene-containing protective layer, if a chemical vapor deposition is used, it is preferable because graphene having high electronic conductivity, few defects, and thin thickness can be formed.

For example, the graphene-containing protective layer according to the present invention may be manufactured through the steps of heat-treating the negative electrode current collector and forming a graphene-containing protective layer on the heat-treated negative electrode current collector through chemical vapor deposition.

The heat treatment is performed in a hydrogen atmosphere or in a mixed gas atmosphere of hydrogen and argon at 900 to 1,200 °C and 1 to 760 torr for 1 to 5 hours to prevent oxidation of the negative electrode current collector, wherein it is preferable that the heat treatment is performed while injecting hydrogen or the mixed gas of hydrogen and argon with 1 to 100 sccm of hydrogen, or 1 to 100 sccm of hydrogen/10 to 1000 sccm of argon.

The chemical vapor deposition is performed using a mixed gas of hydrogen and a carbon-containing gas as a precursor at 900 to 1,200 °C and 0.1 to 760 torr for 10 minutes to 3 hours, wherein the mixed gas of hydrogen and carbon-containing gas is preferably injected at a rate of 1 to 100 sccm of hydrogen/1 to 100 sccm of carbon-containing gas.

In this case, the carbon-containing gas may be any one selected from the group consisting of hydrocarbon gas, gaseous hydrocarbon compound, gaseous alcohol having 1 to 6 carbon atoms, carbon monoxide, and mixtures thereof, and in particular, hydrocarbon gas may be preferably used.

In addition, as the hydrocarbon gas, any one selected from the group consisting of methane, ethane, propane, butane, ethylene, propylene, butylene, acetylene, butadiene, and mixtures thereof is used, and it is more preferable to use methane gas, which is easy to handle. In addition, as the gaseous hydrocarbon compound, any one selected from the group consisting of pentane, hexane, cyclohexane, benzene, toluene, xylene, and mixtures thereof may be used, but is not limited thereto.

In particular, in the chemical vapor deposition method, the quality of graphene can be improved by taking advantage of the fact that as the injection rate of a precursor is reduced, the number of defects in the graphene contained in the protective layer decreases. Accordingly, in the chemical vapor deposition process, the injection rate of the mixed gas of the precursor hydrogen and the carbon-containing gas is more preferably 1 to 50 sccm of hydrogen / 1 to 50 sccm of carbon-containing gas, more preferably 1 to 25 sccm of hydrogen / 1 to 25 sccm of carbon-containing gas.

The negative electrode for the lithium-sulfur battery of the present invention may further comprise a negative electrode active material layer on the protective layer.

The negative electrode active material layer may comprise a negative electrode active material and optionally an electrically conductive material and a binder.

The negative electrode active material may comprise a material capable of reversibly intercalating or deintercalating lithium ion (Li⁺), a material capable of reacting with lithium ion to reversibly form lithium containing compounds, lithium metal, or lithium alloy.

The material capable of reversibly intercalating or deintercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, specifically, in the form of a lithium metal thin film or a lithium metal powder.

The electrically conductive material is a material that electrically connects the electrolyte and the negative electrode active material to serve as a path through which electrons provided from the negative electrode current collector move to the negative electrode active material, and may be used without limitation as long as it has electrical conductivity.

For example, as the electrically conductive material, carbon blacks such as Super-P, Denka black, acetylene black, Ketjen black, channel black, furnace black, lamp black, and thermal black; carbon derivatives such as carbon nanotube or fullerene; electrically conductive fibers such as carbon fiber or metal fiber; carbon fluoride; metal powders such as aluminium powder and nickel powder; and electrically conductive polymers such as polyaniline, polythiophene, polyacetylene, and polypyrrole may be used alone or in combination.

The binder maintains the negative electrode active material in the negative electrode current collector, and organically connects between the negative electrode active materials to further increase the bonding force between them, and as the binder, any binder known in the art may be used.

For example, the binder may be any one selected from the group consisting of fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styreneisoprene rubber; cellulose-based binders comprising carboxy methyl cellulose (CMC), starch, hydroxypropyl cellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The method for forming the negative electrode active material layer is not particularly limited, and a layer or film forming method commonly used in the art can be used. For example, methods such as compression, coating, or deposition can be used. In addition, a metal lithium thin film formed on a metal plate by initial charging after assembling the battery without the lithium thin film in the negative electrode current collector is also included in the negative electrode of the present invention.

In addition, the present invention provides a lithium-sulfur battery comprising the negative electrode for the lithium-sulfur battery.

The lithium-sulfur battery comprises a positive electrode; a negative electrode; and an electrolyte interposed therebetween, wherein the negative electrode comprises the negative electrode for the lithium-sulfur battery according to the present invention.

The positive electrode may comprise a positive electrode current collector and a positive electrode active material layer coated on one or both surfaces of the positive electrode current collector.

The positive electrode may comprise a positive electrode current collector and a positive electrode active material layer coated on one or both surfaces of the positive electrode current collector.

The positive electrode current collector is for supporting the positive electrode active material and is as described in the negative electrode current collector.

The positive electrode active material may comprise sulfur, and specifically may comprise at least one selected from the group consisting of elemental sulfur (S₈) and a sulfur compound. The positive electrode active material may comprise at least one selected from the group consisting of inorganic sulfur, Li₂Sₙ(n≥1), a disulfide compound, an organic sulfur compound and a carbon-sulfur polymer ((C₂Sₓ)ₙ, x=2.5 to 50, n≥2). Preferably, the positive electrode active material may be inorganic sulfur.

Sulfur which is comprised in the positive electrode active material is used in combination with an electrically conductive material such as a carbon material because it does not have electrical conductivity alone. Accordingly, the sulfur is contained in the form of a sulfur-carbon composite, and preferably, the positive electrode active material may be a sulfur-carbon composite.

The carbon in the sulfur-carbon composite is a porous carbon material and provides a framework capable of uniformly and stably immobilizing sulfur, and supplements the low electrical conductivity of sulfur to enable the electrochemical reaction to proceed smoothly.

The porous carbon material can be generally produced by carbonizing precursors of various carbon materials. The porous carbon material may comprise uneven pores therein, the average diameter of the pores is in the range of 1 to 200 nm, and the porosity may be in the range of 10 to 90% of the total volume of the porous carbon material. If the average diameter of the pores is less than the above range, the pore size is only at the molecular level and impregnation with sulfur is impossible. On the contrary, if the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium-sulfur battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); graphite such as natural graphite, artificial graphite, and expanded graphite, and activated carbon. Preferably, the porous carbon material may be carbon nanotubes.

The sulfur-carbon composite may contain 60 to 90 parts by weight, preferably 65 to 85 parts by weight, more preferably 70 to 80 parts by weight of sulfur, based on 100 parts by weight of the sulfur-carbon composite. If the content of sulfur is less than the above-described range, as the content of the porous carbon material in the sulfur-carbon composite is relatively increased, the specific surface area is increased, so that the content of the binder is increased during the manufacture of the positive electrode. The increase in the amount of the binder used may eventually increase the sheet resistance of the positive electrode and act as an insulator to prevent electron pass, thereby deteriorating the performance of the battery. On the contrary, if the content of sulfur exceeds the above range, sulfur that cannot be combined with the porous carbon material agglomerates between them or re-leaches to the surface of the porous carbon material, and thus becomes difficult to receive electrons and cannot participate in electrochemical reactions, resulting in loss of the capacity of the battery.

In addition, sulfur in the sulfur-carbon composite is located on at least one of the inner and outer surfaces of the aforementioned porous carbon material, and at this time, may be present in an area of less than 100%, preferably 1 to 95%, more preferably 60 to 90% of the entire inner and outer surfaces of the porous carbon material. When sulfur is present on the inner and outer surfaces of the porous carbon material within the above range, it can show the greatest effect in terms of the electron transfer area and the wettability with the electrolyte. Specifically, since sulfur is thinly and evenly impregnated on the inner and outer surfaces of the porous carbon material in the above range, the electron transfer contact area may be increased during the charging/discharging process. If sulfur is located in the area of 100% of the entire inner and outer surface of the porous carbon material, the carbon material is completely covered with sulfur, thereby resulting in poor wettability to the electrolyte and has poor contact with the electrically conductive material contained in the electrode and thus cannot receive electrons and cannot participate in the electrochemical reaction.

The method for preparing the sulfur-carbon composite is not particularly limited in the present invention, and a method commonly used in the art may be used. For example, a method of simply mixing sulfur and the porous carbon material and then heat-treating them to form a composite may be used.

The positive electrode active material may further comprise at least one additive selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg or the like, and the group IIIA element may comprise Al, Ga, In, Tl and the like, and the group IVA element may comprise Ge, Sn, Pb, and the like.

The positive electrode active material may be contained in an amount of 40 to 95% by weight, preferably 45 to 90% by weight, more preferably 60 to 90% by weight based on a total of 100% by weight of the positive electrode active material layer constituting the positive electrode. If the content of the positive electrode active material is less than the above range, it is difficult for the positive electrode to sufficiently exert an electrochemical reaction. On the contrary, if the content exceeds the above range, there is a problem that the resistance of the positive electrode is increased and the physical properties of the positive electrode are lowered due to a relatively insufficient content of the electrically conductive material and the binder to be described later.

The positive electrode active material layer may optionally further comprise a electrically conductive material, which allows electrons to move smoothly within the positive electrode (specifically, positive electrode active material), and a binder for well attaching the positive electrode active material to the current collector. At this time, the electrically conductive material and the binder are as described above.

In the present invention, the method of manufacturing the positive electrode is not particularly limited, and a method known to a person skilled in the art or various methods modified therefrom may be used.

As an example, the positive electrode may be prepared by preparing a positive electrode slurry composition comprising the above-described components and then applying the positive electrode slurry composition to at least one surface of the positive electrode current collector.

The positive electrode slurry composition comprises the positive electrode active material, the electrically conductive material, and the binder as described above, and may further comprise a solvent other than these.

As a solvent, a solvent capable of uniformly dispersing the positive electrode active material, the electrically conductive material, and the binder is used. As such a solvent, water is most preferred as an aqueous solvent, but is not necessarily limited thereto, and if necessary, a lower alcohol which can be easily mixed with water may be used. Examples of the lower alcohol comprise methanol, ethanol, propanol, isopropanol, and butanol, and they may be preferably used in mixture with water.

The content of the solvent may be contained at a level of having such a concentration as to facilitate the coating, and the specific content varies depending on the coating method and apparatus.

The positive electrode slurry composition may additionally comprise, if necessary, a material commonly used for the purpose of improving its function in the relevant technical field. For example, a viscosity adjusting agent, a fluidizing agent, a filler, etc. are mentioned.

The method of applying the positive electrode slurry composition is not particularly limited in the present invention, and for example, methods such as doctor blade, die casting, comma coating, and screen printing may be mentioned. In addition, after molding on a separate substrate, the positive electrode slurry may be applied on the positive electrode current collector by pressing or lamination method.

After the application, a drying process for removing the solvent may be performed. The drying process is carried out at a temperature and time at a level capable of sufficiently removing the solvent, and the conditions may vary depending on the type of solvent, and thus are not particularly limited in the present invention. As an example, a drying method by warm air, hot air, or low-humidity air, a vacuum drying method, and a drying method by irradiation with (far)-infrared radiation or electron beam may be mentioned. The drying speed is adjusted so that the solvent can be removed as quickly as possible within the range of speed that does not cause cracks in the positive electrode active material layer due to normal stress concentration or within the range of speed at which the positive electrode active material layer does not peel off from the positive electrode current collector.

Additionally, after the drying, the density of the positive electrode active material in the positive electrode may be increased by pressing the current collector. Methods, such as a mold press and a roll press, are mentioned as a press method.

The negative electrode is as described above.

The electrolyte comprises lithium ions and is used for causing an electrochemical oxidation or reduction reaction in a positive electrode and a negative electrode through these.

The electrolyte may be a non-aqueous electrolyte solution or a solid electrolyte which does not react with lithium metal, but is preferably a non-aqueous electrolyte, and comprises an electrolytic salt and an organic solvent.

The electrolytic salt which is comprised in the non-aqueous electrolyte is lithium salt. The lithium salt can be used without limitation as long as it is commonly used in an electrolyte solution for a lithium secondary battery. For example, the lithium salt may be, for example, LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylate, tetraphenyl lithium borate, lithium imide, etc.

The concentration of the lithium salt may be appropriately determined in consideration of ionic conductivity, solubility, and the like, and may be, for example, 0.1 to 4.0 **M,** preferably 0.5 to 2.0 **M.** If the concentration of the lithium salt is less than the above range, it is difficult to secure ionic conductivity suitable for driving a battery. On the contrary, if the concentration of the lithium salt exceeds the above range, the viscosity of the electrolyte solution increases to decrease the mobility of lithium ions, and the decomposition reaction of the lithium salt itself increases, thereby reducing the performance of the battery. Therefore, the concentration of the lithium salt is appropriately adjusted within the above range.

As the organic solvent contained in the non-aqueous electrolyte solution, those conventionally used in an electrolyte solution for a lithium secondary battery may be used without limitation, and for example, ether, ester, amide, linear carbonate, cyclic carbonate, etc. may be used alone or in combination of two or more thereof.

The ether-based compound may comprise acyclic ethers and cyclic ethers.

For example, the acyclic ether may be, but is not limited to, at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethyl ether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, polyethylene glycol methylethyl ether.

For example, the cyclic ether may be, but is not limited to, at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether.

Examples of the ester of the organic solvent may include, but is not limited to, at least one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone, and a mixture of two or more thereof.

Specific examples of the linear carbonate compound may representatively comprise, but is not limited to, at least one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof.

In addition, specific examples of the cyclic carbonate compound may comprise at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a mixture of two or more thereof. Examples of such halides include, but are not limited to, fluoroethylene carbonate (FEC) and the like.

The electrolyte may further contain nitric acid or a nitrous acid-based compound as an additive in addition to the electrolyte salt and the organic solvent described above. The nitric acid or a nitrous acid-based compound has the effect of forming a stable film on the lithium metal electrode, which is a negative electrode, and improving the charging/discharging efficiency.

The nitric acid or nitrous acid-based compound is not particularly limited in the present invention, but may be at least one selected from the group consisting of inorganic nitric acid or nitrous acid-based compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂); organic nitric acid or nitrous acid-based compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene, and combinations thereof, and preferably may be lithium nitrate.

The injection of the electrolyte can be performed at an appropriate stage during the manufacturing process of the electrochemical device, depending on the manufacturing process and the required properties of the final product. That is, the injection can be applied before the assembly of the electrochemical device or at the final stage of the assembly of the electrochemical device.

A separator may be additionally comprised between the positive electrode and the negative electrode.

The separator enables the lithium ion to be transported between the positive electrode and the negative electrode while separating or insulating the positive electrode and the negative electrode from each other. Such separator may be made of a porous, nonconductive or insulating material and is not particularly limited as long as it is used as a separator in a common lithium secondary battery. The separator may be an independent member such as a film, or a coating layer added to the positive electrode and/or the negative electrode.

It is preferable that the separator has excellent humidification ability for the electrolyte, while exhibiting low resistance to ion migration of electrolyte.

The separator may be made of a porous substrate. The porous substrate can be used as long as it is a porous substrate commonly used in a secondary battery, and may be composed of a porous polymer film alone or by laminating them, and for example, may be a non-woven fabric made of glass fiber or polyethylene terephthalate fiber with high melting point, etc., or a polyolefin-based porous film, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole, and polyarylate.

The thickness of the porous substrate is not particularly limited, but may be 1 to 100 *µ*m, preferably 5 to 50 *µ*m. Although the thickness range of the porous substrate is not particularly limited to the above-mentioned range, if the thickness is excessively thinner than the lower limit described above, mechanical properties are deteriorated and thus the separator may be easily damaged during use of the battery.

The average size and porosity of the pores present in the porous substrate are also not particularly limited, but may be 0.001 to 50 *µ*m and 10 to 95%, respectively.

The lithium secondary battery according to the present invention can be manufactured by lamination, stacking, and folding processes of the separator and the electrodes, in addition to the usual winding process.

The shape of the lithium secondary battery is not particularly limited, and may be various shapes such as a cylindrical shape, a laminate shape, and a coin shape.

Also, the present invention provides a battery module including the lithium-sulfur battery described above as a unit battery.

The battery module may be used as a power source for medium to large-sized devices requiring high temperature stability, long cycle characteristics, high-capacity characteristics, and the like.

Examples of such medium to large-sized devices may comprise, but is not limited to, a power tool powered and moved by an electric motor; an electric car including an electric vehicle (EV), a hybrid electric vehicle (HEV), a plug-in hybrid electric vehicle (PHEV), and the like; an electric motorcycle including an electric bike (E-bike) and an electric scooter (E-scooter); an electric golf cart; a power storage system, etc.

Hereinafter, preferred examples of the present invention will be described in order to facilitate understanding of the present invention. It will be apparent to those skilled in the art, however, that the following examples are only illustrative of the present invention and the scope of protection is defined in the appended claims.

### Example and Comparative Example

### [Example 1]

By flowing 300 sccm of argon gas and 50 sccm of hydrogen gas for 20 minutes at a temperature of 1035 °C to a copper current collector with a thickness of 20 µm, the surface of the oxidized copper thin film is reduced, and pre-faceting of the copper surface was performed. Thereafter, 20 sccm of methane gas was additionally injected at 1035 °C, and a chemical vapor deposition was performed with the roll-to-roll moving speed set to 6 m/hr to prepare a copper current collector in which protective layers containing graphene having a thickness of 1.0 nm were formed on both surfaces.

### [Example 2]

A lithium metal foil having a thickness of 45 *µ*m was placed on one surface of the copper current collector with a protective layer obtained in Example 1, and pressed with a roll press to prepare a negative electrode.

90 wt.% of sulfur-carbon composite (S/C 7:3 parts by weight) as a positive electrode active material, 5 wt.% of Denka Black as an electrically conductive material, and 5 wt.% of styrene butadiene rubber/carboxymethyl cellulose (SBR/CMC 7:3) were mixed to prepare a positive electrode slurry composition.

Then, the prepared positive electrode slurry composition was applied on an aluminum current collector, dried at 50 °C for 12 hours, and compressed with a roll press to prepare a positive electrode.

The prepared negative electrode and positive electrode were placed in a CR2032 coin cell to face each other, and a polyethylene separator having a thickness of 16 *µ*m and a porosity of 68 % was interposed therebetween, and 70 *µ*ℓ of electrolyte was injected to manufacture a coin-type lithium-sulfur battery.

At this time, as the electrolyte, a mixed solution in which 1 M lithium bis(trifluoromethanesulfonyl)imide (LiTFSI) and 1 wt.% of lithium nitrate (LiNO₃) were dissolved in an organic solvent consisting of 1,3-dioxolane and dimethyl ether (DOL: DME = 1:1 (volume ratio)) was used.

### [Example 3]

A pouch-type lithium-sulfur battery was prepared in the same manner as in Example 2 above, except that a negative electrode obtained by pressing the lithium metal foil of the same thickness on both sides of the copper current collector with the protective layers obtained in Example 1 is used, and a pouch cell in which 5 bi-cells are stacked is manufactured.

### [Example 4]

A copper current collector in which graphene-containing protective layers with a thickness of 1.5 nm were formed on both surfaces was manufactured in the same manner as in Example 1, except that during the chemical vapor deposition, the injection rate of methane gas is changed to 5 sccm, and the roll-to-roll movement speed is changed to 1.5 m/hr, respectively.

### [Example 5]

A coin-type lithium-sulfur battery was manufactured in the same manner as in Example 2 above, except that the copper current collector with the protective layers in Example 4 instead of Example 1 is used.

### [Example 6]

A copper current collector in which graphene-containing protective layers with a thickness of 35 nm were formed on both surfaces was manufactured in the same manner as in Example 1, except that during the chemical vapor deposition, the injection rate of hydrogen gas is changed to 25 sccm.

### [Example 7]

A coin-type lithium-sulfur battery was manufactured in the same manner as in Example 2 above, except that the copper current collector with the protective layers in Example 6 instead of Example 1 is used.

### [Example 8]

A copper current collector in which graphene-containing protective layers with a thickness of 20 nm were formed on both surfaces was manufactured in the same manner as in Example 1, except that during the chemical vapor deposition, the injection rate of hydrogen gas is changed to 35 sccm.

### [Example 9]

A coin-type lithium-sulfur battery was manufactured in the same manner as in Example 2 above, except that the copper current collector with the protective layers in Example 8 instead of Example 1 is used.

### [Comparative Example 1]

A copper thin film having a thickness of 20 µm without forming a protective layer was prepared as a copper current collector.

### [Comparative Example 2]

A coin-type lithium-sulfur battery was manufactured in the same manner as in Example 2 above, except that the copper current collector in Comparative Example 1 instead of Example 1 is used.

### [Comparative Example 3]

A pouch-type lithium-sulfur battery was prepared in the same manner as in Example 3, except that the copper current collector in Comparative Example 1 instead of Example 1 is used.

### [Comparative Example 4]

A slurry composition was prepared by mixing 95 wt.% of exfoliated graphene powder (product from G3) and 5 wt.% of styrene butadiene rubber/carboxymethyl cellulose (SBR/CMC 7:3).

Then, the prepared slurry composition was applied to both surfaces of a copper current collector having a thickness of 20 µm , dried at 60 °C for 12 hours, and compressed with a roll press to prepare a copper current collector coated with an exfoliated graphene protective layer.

### [Comparative Example 5]

A coin-type lithium-sulfur battery was manufactured in the same manner as in Example 2 above, except that the copper current collector in Comparative Example 4 instead of Example 1 is used.

### [Comparative Example 6]

A copper current collector in which graphene-containing protective layers with a thickness of 100 nm were formed on both surfaces was manufactured in the same manner as in Example 1, except that during the chemical vapor deposition, the injection rate of hydrogen gas is changed to 5 sccm.

### [Comparative Example 7]

A coin-type lithium-sulfur battery was manufactured in the same manner as in Example 2 above, except that the copper current collector in Comparative Example 6 instead of Example 1 is used.

### Experimental Example 1. Scanning electron microscope analysis

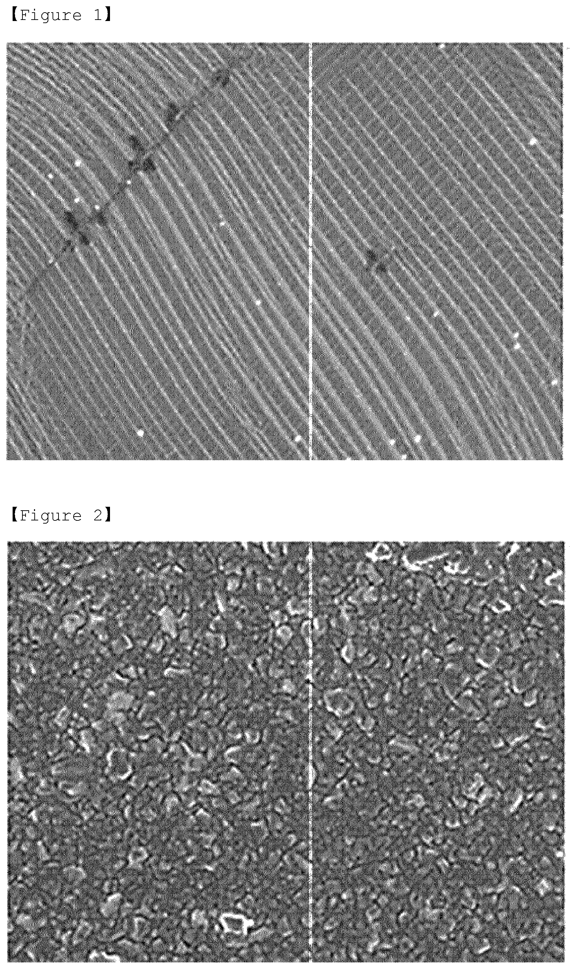

The surface of the copper current collector with a protective layer prepared in Example 1 and Comparative Example 1 was observed with a scanning electron microscope (SEM). As a scanning electron microscope, JSM7610F manufactured by JEOL was used. The results obtained at this time are shown in FIGs. 1 and 2.

It can be seen that referring to FIG. 2, the surface of Comparative Example 1 has a surface structure in which nanometer-sized copper crystals are clustered together, but as shown in FIG. 1, the surface of Example 1 is a single layer and has a smooth surface as a graphene-containing protective layer with few defects is formed.

### Experimental Example 2. X-ray photoelectron spectroscopy and Raman spectroscopy analysis

### (1) Oxidation resistance of the protective layer and the size of graphene grains

After performing an artificial thermal oxidation reaction on the copper current collector with a protective layer prepared in Examples 1 and 4 at 200 °C for 6 hours, the oxidation degree of copper was measured using an X-ray photoelectron spectroscopy apparatus.

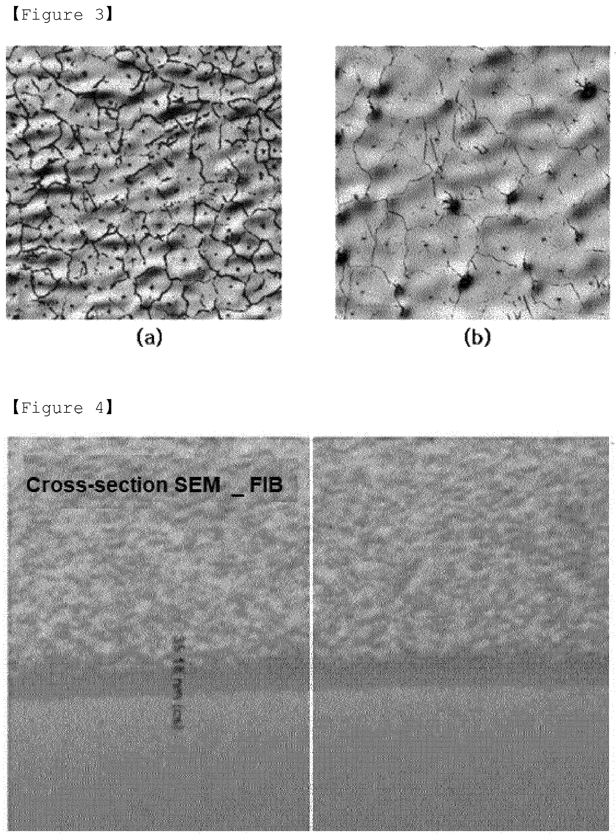

After measuring the oxidation degree of copper, the surfaces of the copper current collectors of Examples 1 and 4 were measured with a scanning electron microscope, and the size of graphene grains was measured by analyzing them. The results obtained at this time are shown in Tables 1 and 2 and FIG. 3.

**Table 1:**

| Heat treatment time (hours) | O1s peak intensity | |
|---|---|---|
| | Example 1 | Example 4 |
| 2 | 5.50 | 3.86 |
| 4 | 16.9 | 6.92 |
| 6 | 23.0 | 9.69 |

**Table 2:**

| | Example 1 | Example 4 |
|---|---|---|
| Size of graphene grain (*µ*m²) | 110 | 440 |

Referring to Tables 1 and 2 and FIG. 3, it can be confirmed that in the case of Example 4, the size of the grains of graphene contained in the protective layer is about 4 times larger compared to Example 1, and thus, the grain boundaries, i.e. defects that can act as a cause of corrosion are reduced, and oxidation resistance can be improved.

From these results, it can be seen that the fewer defects in the graphene contained in the protective layer and the larger the grain size are, the better the impermeability to lithium polysulfide is.

### (2) Analysis of the structure and defects of graphene contained in the protective layer

A Raman spectroscopic analysis was performed on the graphene of the protective layer prepared according to Examples 1, 4 and 6, and Comparative Examples 1 and 4 using a Raman spectrometer (Raman-XploRA, HORIBA Scientific). In addition, the cross-section of the copper current collector with the protective layer prepared in Example 6 was observed with a scanning electron microscope (SEM). As a scanning electron microscope, JSM7610F manufactured by JEOL was used. The results obtained at this time are shown in Table 3 and FIG. 4.

**Table 3:**

| | D peak/G peak (I_{D}/I_{G}) | 2D peak/G peak (I_{2D}/I_{G}) |
|---|---|---|
| Example 1 | 0.09 | 1.1 |
| Example 4 | 0.02 | 1.2 |
| Example 6 | 0.12 | 0.2 |
| Comparative Example 1 | - | - |
| Comparative Example 4 | 0.9 | 0.2 |
| Exfoliated graphene powder from G3 company | 1.00 | 0.02 |

As shown in Table 3 above, it can be seen that as a result of Raman spectroscopy, in the case of graphene contained in the protective layer according to Examples 1, 4 and 6, the ratio of D peak and G peak was significantly lower than those of graphene contained in the protective layer according to Comparative Example 4, and thus graphene with few defects was formed on the negative electrode current collector through the chemical vapor deposition.

In addition, it can be confirmed that in the case of Examples 1 and 4, since the ratio of 2D peak and G peak is higher than that in Example 6, multilayer graphene was formed in the case of Example 6. Specifically, referring to FIG. 4, in the case of Example 6, it can be seen that graphene having a multilayer structure was prepared with a thickness of the protective layer at the level of 30 nm.

### Experimental Example 3. Evaluation of lifetime characteristics of battery

The lifetime characteristics of lithium-sulfur batteries manufactured in Examples 2, 3, 5, 7 and 9 and Comparative Examples 2, 3, 5 and 7 were evaluated.

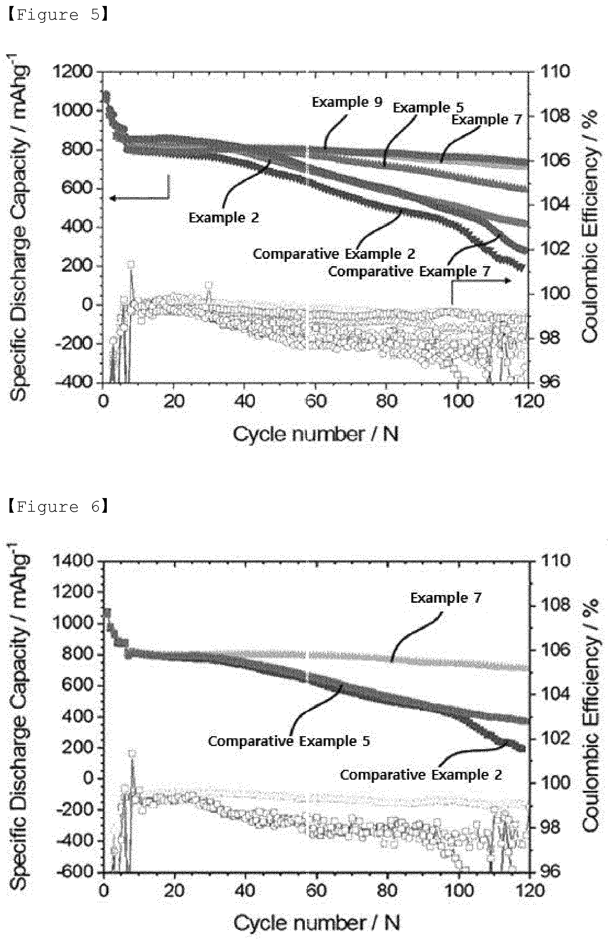

Specifically, in Examples 2, 5, 7 and 9 and Comparative Examples 2, 5 and 7, after repeating discharging and charging three times at 25 °C at a current density of 0.1 C, and then performing discharging and charging three times at a current density of 0.2 C, the discharging capacity and coulombic efficiency were measured while performing 0.5 C discharging and 0.3 C charging to evaluate the lifetime characteristics of the batteries. The results obtained at this time are shown in FIGs. 5 and 6.

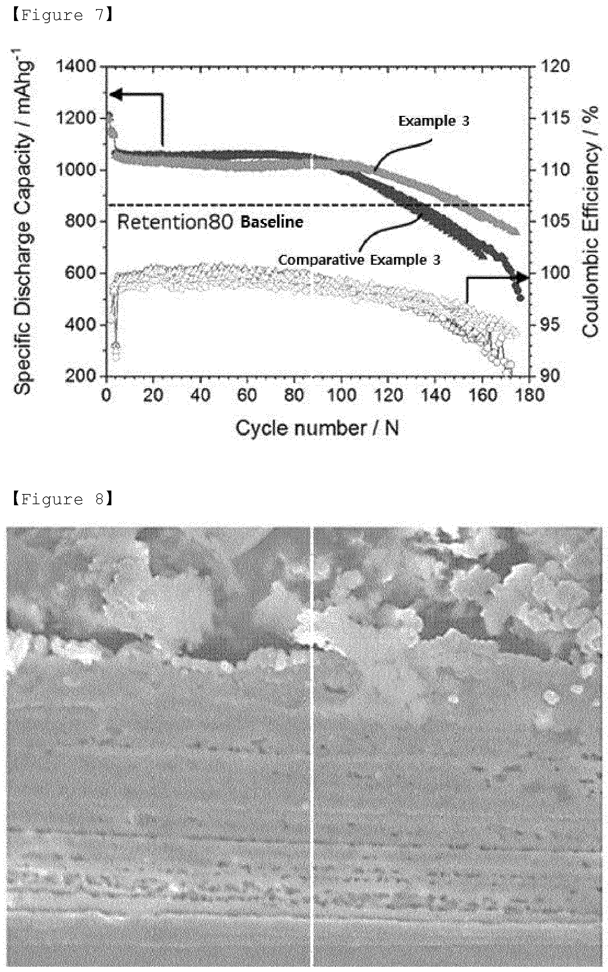

In addition, in Example 3 and Comparative Example 3, after repeating discharging and charging three times at 25 °C at a current density of 0.1 C, the discharging capacity and coulombic efficiency were measured while performing 0.3 C discharging and 0.2 C charging to evaluate the lifetime characteristics of the batteries. The results obtained at this time are shown in FIG. 7.

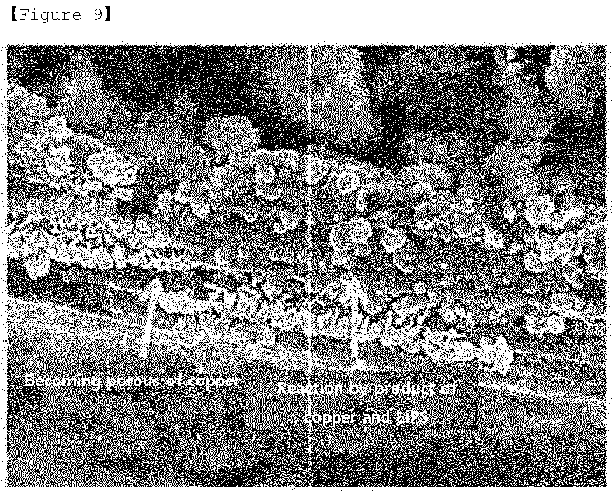

Additionally, the batteries of Example 3 and Comparative Example 3 were operated for 117 cycles and disassembled, and the cross-section of the negative electrode was observed with a scanning electron microscope (SEM). The results obtained at this time are shown in FIGs. 8 and 9.

Through FIGs 5 to 7, it can be seen that the batteries according to Examples have superior lifetime characteristics compared to Comparative Examples.

Specifically, it can be seen that in the case of the batteries of Examples 2, 3, 5, 7 and 9 comprising a negative electrode current collector comprising a graphene-containing protective layer, the retention of the coulombic efficiency and the retention of the capacity are high during the progress of the cycles, compared to Comparative Examples 2 and 3 comprising a negative electrode current collector that does not comprise a protective layer.

Also, referring to FIG. 7, it can be seen that the lifetime of Example 3 is increased by about 17.3%, as compared to Comparative Example 3.

In addition, as shown in FIG. 6, it can be seen that in the case of Comparative Example 5, in which a protective layer was formed by coating a composition containing exfoliated graphene, rather than chemical vapor deposition, there are many defects in the graphene contained in the protective layer, so the lifetime characteristics of the battery are remarkably low, as compared to Example 7.

In addition, as shown in FIGs. 8 and 9, it can be seen that in the case of Comparative Example 3, due to the reaction with lithium polysulfide, the current collector became porous and also a large amount of sulfide-based byproducts were generated, as compared to Example 3.

From these results, it can be confirmed that when the negative electrode according to the present invention is comprised, the lifetime characteristics of the lithium-sulfur battery are improved by comprising a protective layer containing graphene with few defects and thus suppressing the corrosion of the negative electrode current collector caused by lithium polysulfide.

## Claims

1. A negative electrode for a lithium-sulfur battery, the negative electrode comprising a negative electrode current collector and a protective layer,
wherein the protective layer is located on at least one surface of the negative electrode current collector and contains graphene;
the protective layer is obtainable by chemical vapor deposition using a mixed gas of hydrogen and a carbon-containing gas as a precursor at 900 to 1,200 °C and 0.1 to 760 torr for 10 minutes to 3 hours wherein the mixed gas of hydrogen and carbon-containing gas is injected at a rate of 1 to 100 sccm of hydrogen / 1 to 100 sccm of carbon-containing gas; and
the graphene has a ratio of D peak and G peak of 0.01 to 0.6 in a Raman spectrum using a Raman spectrometer (Raman-XploRA, HORIBA Scientific).

2. The negative electrode according to claim 1, wherein the protective layer includes monolayer graphene or multilayer graphene.

3. The negative electrode according to claim 2, wherein the multilayer graphene has 2 to 100 layers determined using a scanning electron microscope (SEM), JSM7610F manufactured by JEOL.

4. The negative electrode according to claim 1, wherein the graphene has a ratio of 2D peak and G peak of 0.2 to 2.0 in a Raman spectrum using a Raman spectrometer (Raman-XploRA, HORIBA Scientific).

5. The negative electrode according to claim 1, wherein the protective layer has a thickness of 0.1 to 50 nm determined using a scanning electron microscope (SEM), JSM7610F manufactured by JEOL.

6. The negative electrode according to claim 1, wherein the negative electrode current collector comprises at least one selected from the group of nickel, copper, stainless steel, titanium, vanadium, chromium, manganese, iron, cobalt, zinc, molybdenum, tungsten, silver, gold, ruthenium, platinum, iridium, aluminum, tin, bismuth, and antimony.

7. The negative electrode according to claim 1, wherein the negative electrode current collector is in the form of film, sheet, foil, mesh, net, porous body, foam, or nonwoven fabric.

8. The negative electrode according to claim 1, wherein the negative electrode further comprises a negative electrode active material layer on the protective layer.

9. The negative electrode according to claim 8, wherein the negative electrode active material layer comprises lithium metal or lithium alloy.

10. The negative electrode according to claim 8, wherein the negative electrode active material layer comprises a lithium metal thin film.

11. A lithium-sulfur battery comprising a positive electrode comprising a positive electrode active material; the negative electrode according to claim 1; and an electrolyte.

12. The lithium-sulfur battery according to claim 11, wherein the positive electrode active material comprises at least one selected from the group consisting of inorganic sulfur, Li₂Sₙ (n≥1), a disulfide compound, an organic sulfur compound and a carbon-sulfur polymer ((C₂Sₓ)ₙ, x=2.5 to 50, n≥2).

## Patentansprüche

1. Negative Elektrode für eine Lithium-Schwefel-Batterie, wobei die negative Elektrode einen Stromabnehmer der negativen Elektrode und eine Schutzschicht umfasst,
wobei sich die Schutzschicht auf mindestens einer Oberfläche des Stromabnehmers der negativen Elektrode befindet und Graphen enthält;
die Schutzschicht durch chemische Gasphasenabscheidung unter Verwendung eines Mischgases aus Wasserstoff und einem kohlenstoffhaltigen Gas als Vorläufer bei 900 bis 1.200 °C und 0,1 bis 760 Torr für 10 Minuten bis 3 Stunden erhältlich ist, wobei das Mischgas aus Wasserstoff und kohlenstoffhaltigem Gas mit einer Rate von 1 bis 100 sccm Wasserstoff / 1 bis 100 sccm kohlenstoffhaltigem Gas eingespritzt wird; und
das Graphen ein Verhältnis von D-Peak und G-Peak von 0,01 bis 0,6 in einem Raman-Spektrum unter Verwendung eines Raman-Spektrometers (Raman-XploRA, HORIBA Scientific) aufweist.

2. Negative Elektrode nach Anspruch 1, wobei die Schutzschicht einschichtiges Graphen oder mehrschichtiges Graphen enthält.

3. Negative Elektrode nach Anspruch 2, wobei das mehrschichtige Graphen 2 bis 100 Schichten aufweist, bestimmt unter Verwendung eines Rasterelektronenmikroskops (SEM), JSM7610F, hergestellt von JEOL.

4. Negative Elektrode nach Anspruch 1, wobei das Graphen ein Verhältnis von 2D-Peak und G-Peak von 0,2 bis 2,0 in einem Raman-Spektrum unter Verwendung eines Raman-Spektrometers (Raman-XploRA, HORIBA Scientific) aufweist.

5. Negative Elektrode nach Anspruch 1, wobei die Schutzschicht eine Dicke von 0,1 bis 50 µm aufweist, bestimmt unter Verwendung eines Rasterelektronenmikroskops (SEM), JSM7610F, hergestellt von JEOL.

6. Negative Elektrode nach Anspruch 1, wobei der Stromabnehmer der negativen Elektrode mindestens eines umfasst, ausgewählt aus der Gruppe von Nickel, Kupfer, Edelstahl, Titan, Vanadium, Chrom, Mangan, Eisen, Kobalt, Zink, Molybdän, Wolfram, Silber, Gold, Ruthenium, Platin, Iridium, Aluminium, Zinn, Wismut und Antimon.

7. Negative Elektrode nach Anspruch 1, wobei der Stromabnehmer der negativen Elektrode in Form eines Films, einer Folie, einer Folie, eines Netzes, eines Netzes, eines porösen Körpers, eines Schaums oder eines Vliesstoffs vorliegt.

8. Negative Elektrode nach Anspruch 1, wobei die negative Elektrode ferner eine Aktivmaterialschicht der negativen Elektrode auf der Schutzschicht umfasst.

9. Negative Elektrode nach Anspruch 8, wobei die Aktivmaterialschicht der negativen Elektrode Lithiummetall oder eine Lithiumlegierung umfasst.

10. Negative Elektrode nach Anspruch 8, wobei die Aktivmaterialschicht der negativen Elektrode einen Lithiummetalldünnfilm umfasst.

11. Lithium-Schwefel-Batterie, umfassend eine positive Elektrode, umfassend ein Aktivmaterial der positiven Elektrode; die negative Elektrode nach Anspruch 1; und einen Elektrolyten.

12. Lithium-Schwefel-Batterie nach Anspruch 11, wobei das Aktivmaterial der positiven Elektrode mindestens eines umfasst, ausgewählt aus der Gruppe bestehend aus anorganischem Schwefel, Li₂Sₙ (n≥1), einer Disulfidverbindung, einer organischen Schwefelverbindung und einem Kohlenstoff-Schwefel-Polymer ((C₂Sₓ)ₙ, x=2,5 bis 50, n≥2).

## Revendications

1. Électrode négative pour une batterie au lithium-soufre, l'électrode négative comprenant un collecteur de courant d'électrode négative et une couche protectrice,
dans laquelle la couche protectrice est située sur au moins une surface du collecteur de courant d'électrode négative et contient du graphène ;
la couche protectrice peut être obtenue par dépôt chimique en phase vapeur en utilisant un gaz mélangé d'hydrogène et d'un gaz contenant du carbone étant un précurseur à 900 à 1200°C et 0,1 à 760 torr pendant 10 minutes pendant 3 heures, dans laquelle le gaz mélangé d'hydrogène et de gaz contenant du carbone est injecté à raison de 1 à 100 sccm d'hydrogène / 1 à 100 sccm de gaz contenant du carbone ; et
le graphène a un rapport de pic D et de pic G de 0,01 à 0,6 dans un spectre de Raman en utilisant un spectromètre Raman (Raman-XploRA, HORIBA Scientific).

2. Électrode négative selon la revendication 1, dans laquelle la couche protectrice inclut du graphène monocouche ou du graphène multicouche.

3. Électrode négative selon la revendication 2, dans laquelle le graphène multicouche a 2 à 100 couches déterminées en utilisant un microscope électronique à balayage (SEM), JSM7610F fabriqué par JEOL.

4. Électrode négative selon la revendication 1, dans laquelle le graphène a un rapport de pic 2D et de pic G de 0,2 à 2,0 dans un spectre de Raman en utilisant un spectromètre Raman (Raman-XploRA, HORIBA Scientific).

5. Électrode négative selon la revendication 1, dans laquelle la couche protectrice a une épaisseur de 0,1 à 50 nm, déterminée en utilisant un microscope électronique à balayage (SEM), JSM7610F fabriqué par JEOL.

6. Électrode négative selon la revendication 1, dans laquelle le collecteur de courant d'électrode négative comprend un ou plusieurs éléments sélectionnés dans le groupe de nickel, cuivre, acier inoxydable, titane, vanadium, chrome, manganèse, fer, cobalt, zinc, molybdène, tungstène, argent, or, ruthénium, platine, iridium, aluminium, étain, bismuth et antimoine.

7. Électrode négative selon la revendication 1, dans laquelle le collecteur de courant d'électrode négative est sous la forme de film, feuille, feuille métallique, maillage, filet, corps poreux, mousse ou tissu non tissé.

8. Électrode négative selon la revendication 1, dans laquelle l'électrode négative comprend en outre une couche de matériau actif d'électrode négative sur la couche protectrice.

9. Électrode négative selon la revendication 8, dans laquelle la couche de matériau actif d'électrode négative comprend du métal lithium ou un alliage de lithium.

10. Électrode négative selon la revendication 8, dans laquelle la couche de matériau actif d'électrode négative comprend un film mince de métal lithium.

11. Batterie au lithium-soufre comprenant une électrode positive comprenant un matériau actif d'électrode positive ; une électrode négative selon la revendication 1 ; et un électrolyte.

12. Batterie au lithium-soufre selon la revendication 11, dans laquelle le matériau actif d'électrode positive comprend un ou plusieurs éléments sélectionnés dans le groupe constitué de soufre inorganique, Li₂Sₙ (n≥1), un composé de disulfure, un composé de soufre organique et un polymère de carbone-soufre ((C₂Sₓ)ₙ, x=2,5 à 50, n≥2).
